Europäisches Patentamt

European Patent Office

Office européen des brevets

(11) Publication number: **0 263 708**
**A2**

## (12) EUROPEAN PATENT APPLICATION

(21) Application number: **87308915.5**

(22) Date of filing: **08.10.87**

(51) Int. Cl.⁴: **B 60 P 1/32**
**B 60 P 1/20**

(30) Priority: **09.10.86 NZ 217859**

(43) Date of publication of application:
**13.04.88 Bulletin 88/15**

(84) Designated Contracting States:
**AT BE CH DE ES FR GB GR IT LI LU NL SE**

(71) Applicant: **Campbell, Lyall John**
**10 Muritai Road**
**Milford Auckland (NZ)**

(72) Inventor: **Campbell, Lyall John**
**10 Muritai Road**
**Milford Auckland (NZ)**

(74) Representative: **Woodward, John Calvin et al**
**VENNER SHIPLEY & CO. 368 City Road**
**London EC1V 2QA (GB)**

(54) Improvements in or relating to tipping trays.

(57) This invention relates to a tipping tray 10 mounted on a ground wheeled vehicle (11). The vehicle (11) incorporates a slotted guide (15) and pivot (14) along and about which the tray (10) may be articulated, and a cam (20) and cam-follower (17) to control the rate and angle at which the tray (11) may be tipped. To tip the tray (11) a latch (22) securing it to the vehicle (11) is released. The vehicle (11) is then reversed, and its brakes suddenly applied. The guide (15) and cam (20) interact to produce the tipping action when the vehicle's inertia is suddenly altered.

FIGURE 1

EP 0 263 708 A2

**Description**

## IMPROVEMENTS IN OR RELATING TO TIPPING TRAYS

### FIELD OF THE INVENTION

This invention relates to tippable trays, for use in vehicles and carriages such as trucks, trailers and utility automobiles. The structure thereof has been particularly designed so that a tipping action is produced when the inertia of an associated vehicle is suddenly altered.

### DESCRIPTION OF THE PRIOR ART

In the past, tippable trays have typically had a winch mechanism or other means, such as a hydraulic lift, for operating the tray between their carriage and discharge positions. However, such mechanisms can be expensive and complicated, prone to failure and, particularly in the case of the simpler, winch mechanisms, be laborious and time consuming to operate.

It is an object of the present invention to provide a means of going some way to overcoming at least some of the foregoing difficulties.

### SUMMARY OF THE INVENTION

In a first aspect of this invention there is provided a ground wheeled vehicle comprising a tipping tray, a chassis, a pivot mounting secured to one of the tray and chassis, guiding means secured to the other of the tray and chassis adapted to slidably accomodate the pivot mounting, and spaced apart therefrom, an inclined cam and cam-follower pair, one secured to the tray and the other to the chassis adapted to interactively operate to alter the disposition of the tray between a carriage position and a discharge position when the pivot mounting is moved about the guiding means.

In a second aspect, the present invention broadly consists in a method of tipping a tray relative to its mounting from a carriage position to a discharge position the method comprising the steps of causing the tray and chassis to slide relative to each other, so that a cam and cam-follower pair, one secured to the tray and one to the chassis, interact to produce a tipping action by propelling the chassis horizontally then suddenly braking it to a halt so that the tray upon it continues to move by virtue of its inertia.

### BRIEF DESCRIPTION OF THE DRAWING

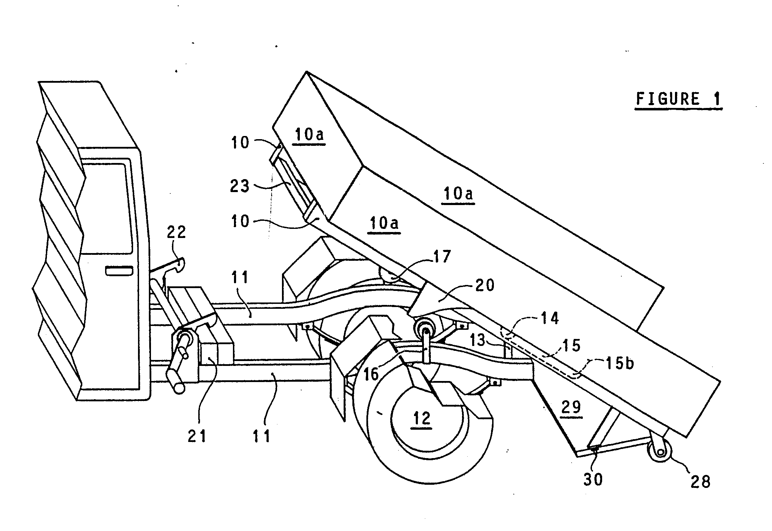

Figure 1 is a perspective view of the tipping tray in a discharge position as applied to a truck.

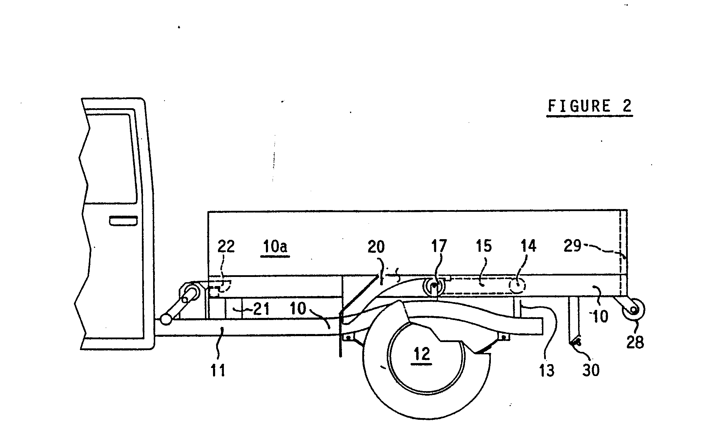

Figure 2 is a side view of the tipping tray in a carriage position as applied to a truck, and

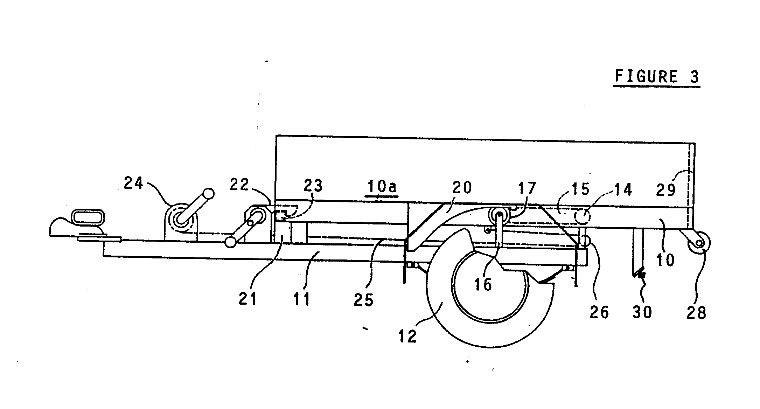

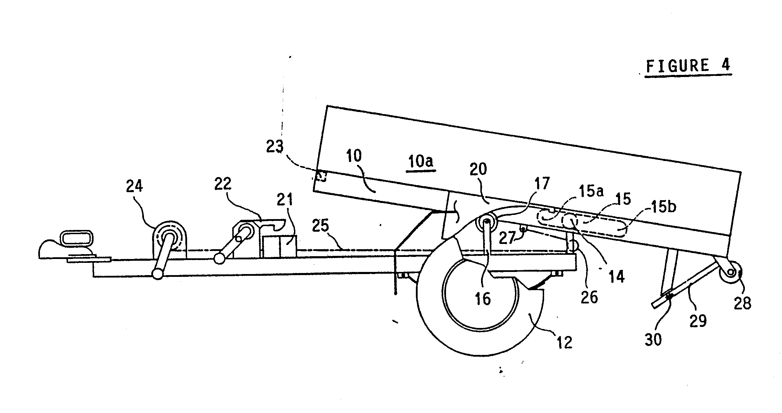

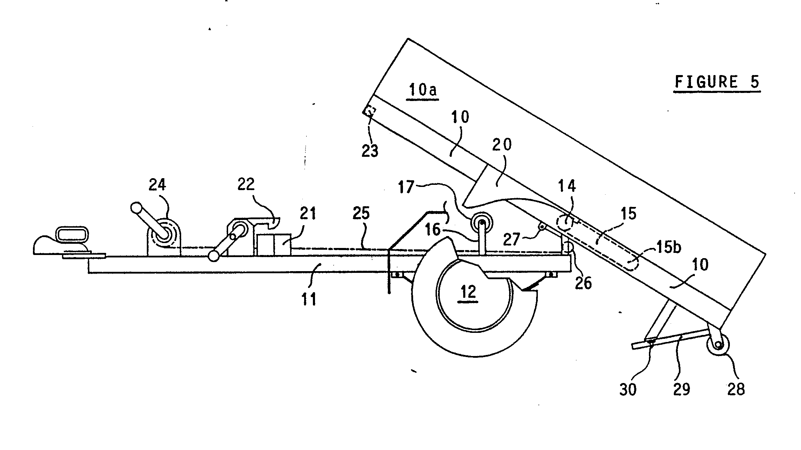

Figures 3-5 are side views of the tipping tray as applied to a trailer incorporating a winch mechanism, sequencing from a carriage position through a partially tipped position to a discharge position

### DESCRIPTION OF SPECIFIC EMBODIMENTS

In the preferred form of the present invention as illustrated in the accompanying drawings, a tray 10 is mounted on the rear chassis 11 of a truck or utility vehicle. In use the chassis of the vehicle is generally horizontally disposed and includes at least one wheel axle, for road wheels 12 mounted thereto.

Protruding up from each side of the chassis 11, from a position typically a little behind the wheel axle, is a bracket 13 with a pivoting member such as a roller 14 mounted proud of a distal end thereof. The pivot roller 14 is adapted to be located within a closed ended elongate guide channel 15 secured in a preferably parallel relationship to the underside of the tray 10.

In use, the guide channel 15 and attached tray 10 may be translated both backwards and forwards with respect to the chassis 11 to alter the equilibrium of the tray 10, and may be articulated about the pivot roller 14 and its associated mounting bracket 13, to alter the angular disposition of the tray 10 between carriage and discharge positions.

Preferably there is provided on each side of the chassis, forward of the bracket 13, typically by a distance of approximately one metre, a second bracket 16 with a roller 17 mounted proud of a distal end thereof, adapted to control the angular disposition of the tray in relation to the position of the pivot roller 14 within the guide channel 15.

The second bracket 16 is slightly offset from the first bracket 13, so that the roller 17 does not interfere with the operation of the guide channel 15. At the corresponding position of the tray there is a ramp 20. The ramp 20 and the second roller 17 coact to form a cam and cam-follower pair.

In use as the tray 10 is slid backwards relative to the chassis 11, the guide channel 15 correspondingly slides backwards about the pivot roller 14. Simultaneously, the ramp 20 bears against the second roller 17, so that the forward part of the tray 10 is raised. A closed end 15a of the guide channel 15 restrains the rearward part of the tray against rising, so that the tray is tilted backwards and about the closed end 15a and pivot roller 14, so that material carried by the tray may be discharged therefrom.

Those skilled in the art will appreciate that to return the tray 10 to ist carriage position the tray 10 is slid forwards again; the guide channel 15 moves forwards along the pivot roller 14 to a second closed end 15b, and the ramp 20, acting as a cam, slides down the cam-follower roller 17, where it rests upon a tray support 21 of the chassis 11.

In the preferred form of the invention the tray is provided with a latchable element such as a rail 23 mounted to a front lower edge thereof, which is adapted to be captured by a latch 22 disposed on a proximate section of the chassis 11.

It will be appreciated that the latch 22 may be manually or remotely controlled and while in an engaged mode, prevents the tray 10 and chassis 11 from moving relative to each other particularly during the normal motion of the vehicle.

In practice, when it is desired to tip the tray 10 to its discharge position, the latch 22 securing the tray 10 and chassis 11 together (and against relative movement thereof) is disengaged.

The truck is then driven backwards for a short distance, and the brakes applied. The truck, including the chassis 11, stops, but the tray 10, being no longer rigidly secured to the chassis 11, continues moving backwards as a result of its inertia , ie the tendency to resist a change in motion.

The result is, that the sequence of events described above takes place, and the tray tilts backwards to its discharge position by the action of the cam and cam-follower arrangement 17, 20.

The tray's load can thus de discharged. It is then a relatively simple matter to push the tray forwards again, so that it returns to its lowered, carriage position, provided that it is appropriately balanced i.e. its point of equilibrum is in the vicinity of the region between the guide channel and the cam ramp. This lowering can be achieved by the sudden stopping of the truck's forward movement.

The latch 22 can then be secured again, and the tray is ready for its next load.

If desired, or if the vehicle is to be used on undulating terrain, a winch 24 may be secured to the chassis 11, forward of the tray 10, with a winch cable 25 extending therefrom to the rear of the chassis 11, about a pulley 26 and then to an anchor point 27 on the tray 10. Thus, once the latch 22 securing the tray 10 is released, winding up the winch 24 will cause the tray 10 to move backwards relative to the chassis 11 to the discharge position.

It will be appreciated that the winch may be manually wound or independently operated from a suitable prime mover, or may be activated via a power take from an associated automobile.

Various modifications to the above may be made without departing from the scope of the present invention as broadly defined or envisaged. For example, the cam ramps 20 may be secured to the chassis, and the cam followers 17 to the tray. Similarly, the guide channels 15 may be on the chassis 11 and the pivot rollers 14 mounted to the underside of the tray 11.

Instead of a pair of cam 20 and cam-followers 17 arrangements, one each side of the vehicle, there can be any appropriate number of them, from one up, and they can be located and arranged in any suitable manner.

Similarly, there can be any appropriate number and arrangement of guide channels 15 and pivot rollers 14 or mountings 13. In place of an elongate channel 15, any other appropriate guiding means may be used.

The cam follower 17 and the pivot mounting need not necessarily be rollers. Slide blocks or any other suitable low friction device may be used.

The cam may comprise a simple ramp, or the ramp may be arcuate, or curved as in the shape of a long S, to modify the rate at which the tray rises and falls at different stages of its tipping movement up or down.

In a further modification to the above, the tray 10 may be provided, proud of a rear lower end thereof, with at least one suitable buffer 28, such as a skid, wheel or roller, adapted to prevent undue damage to the lower rear end which may occur when the tray 10 is disposed in the discharge position.

The tray 10 may further be bounded on all but the rear of its edges by material retaining means such as walls 10a, and incorporate at a rear edge thereof either a removable or articulated tailgate 29 so that material being discharged from the tray 10 is not impeded during titting thereof. It will be appreciated that where an articulated tailgate is utilized suitable retaining means 30 may be provided to maintain tailgate's position clear of any discharging material, when the tray 10 is to be tipped.

The invention may be applied to a trailer, or to any type of vehicle or other platform on which a load tray may be tiltably mounted.

Finally it will be appreciated that further alterations and modifications may be made without departing from the scope of the invention as defined in the following claims.

## Claims

1. A ground wheeled vehicle comprising a tipping tray (10,) a chassis (11,) a pivot mounting (14) secured to one of the tray (10) and chassis (11,) guiding means (15) secured to the other of the tray (10) and chassis (11) adapted to slidably accomodate the pivot mounting (14,) and spaced apart therefrom an inclined cam (20) and cam follower (17) pair, one secured to the tray (11) and the other to the chassis (10) and adapted to interactively operate to alter the disposition of the tray (11) between a carriage position and a discharge position when the pivot mounting (14) is moved about the guiding means (15).

2. A ground wheeled vehicle as claimed in Claim 1 wherein; in a carriage position the tray (11) is in a substantially parallel relationship with the chassis (10;) and the cam-follower (17), comprising a wheel or roller, is disposed at a beginning of a ramp forming the inclined cam (20).

3. A ground wheeled vehicle as claimed in Claim 2 wherein latching means comprising a rail (23) disposed on a lower front edge of the tray (10,) and at least one latch (22) disposed on a proximate section of the chassis (11), are adapted to maintain the carriage disposition of the chassis (11) and tray (10) relative to one another.

4. A ground wheeled vehicle as claimed in Claim 3 wherein a buffer (28) in the form of at least one wheel or roller, is provided at a lower rear end of the tray (11).

5. A ground wheeled vehicle as claimed in Claim 4 wherein the pivot mounting (14) comprises a wheel or roller.

FIGURE 1

FIGURE 2

0263708

FIGURE 3

FIGURE 4

0263708

FIGURE 5